(19) Europäisches Patentamt
European Patent Office
Office européen des brevets

(11) **EP 4 076 920 B1**

(12) **EUROPEAN PATENT SPECIFICATION**

(45) Date of publication and mention
of the grant of the patent:
**03.01.2024 Bulletin 2024/01**

(21) Application number: **20808270.1**

(22) Date of filing: **27.11.2020**

(51) International Patent Classification (IPC):
***B29D 30/06*** (2006.01)

(52) Cooperative Patent Classification (CPC):
**B29D 30/0662;** B29D 2030/0675

(86) International application number:
**PCT/IB2020/061221**

(87) International publication number:
**WO 2021/123974 (24.06.2021 Gazette 2021/25)**

(54) **VULCANISATION PROCESS AND APPARATUS FOR TYRES**

VERFAHREN UND VORRICHTUNG FÜR DIE VULKANISATION VON REIFEN

PROCÉDÉ ET APPAREIL POUR LA VULCANISATION DE PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2019 IT 201900024970**

(43) Date of publication of application:
**26.10.2022 Bulletin 2022/43**

(73) Proprietor: **Pirelli Tyre S.p.A.
20126 Milano (IT)**

(72) Inventors:
• **CASALI, Andrea
20126 Milano (IT)**
• **MORRONE, Giuseppe
20126 Milano (IT)**
• **POZZA, Alessandro
10036 Settimo Torinese (IT)**
• **RICCI, Fabrizio
20126 Milano (IT)**
• **ZANICHELLI, Claudio
20134 Milano (IT)**

(74) Representative: **Tansini, Elio Fabrizio
Bugnion S.p.A.
Viale Lancetti 17
20158 Milano (IT)**

(56) References cited:
WO-A1-2009/041971    WO-A1-2018/017039
GB-A- 2 130 756    US-A1- 2008 084 002
US-B2- 8 163 210

## Description

The present invention relates to a vulcanisation process and a vulcanisation apparatus for tyres.

The term "elastomeric" is herein used for indicating a material or a composition comprising at least one elastomeric polymer and at least one reinforcement filler. Preferably, such composition also comprises additives such as cross-linking agents and/or plasticising agents. Due to the presence of the cross-linking agents, such material can be cross-linked by heating, so as to form the final manufactured item.

Generally, the attainment of tyres for vehicle wheels provides that, following a step of building the green tyre via assembly of respective components - each having a respective elastomeric composition, some of which provided with suitable reinforcement structures - a moulding and vulcanisation treatment is performed. Such treatment is essentially aimed to determine the structural stabilisation of the tyre via cross-linking of the aforesaid elastomeric compositions as well as, as generally requested, to impart on the same a desired tread design and possible distinctive graphic marks at the sidewalls of the tyre. For such purpose, the green tyre is introduced into a suitably-heated vulcanisation mould, having a moulding cavity counter-shaped with respect to the final shape to be conferred to the tyre itself. After having performed the closing of the mould, the green tyre is pressed against the containment walls of the moulding cavity with simultaneous supply of the heat necessary to make the vulcanisation of the tyre itself. For such purpose, for example, a membrane with toroidal shape is made to expand within the tyre via introduction of pressurized steam within said membrane, so as to bring the latter in contact with the inner surface of the tyre and compress the latter against the containment walls of the moulding cavity. The pressurized steam introduced in the expanded membrane within the tyre also determines the supply of a part of the heat necessary for the purpose of vulcanisation. Another part of the heat is supplied from outside the tyre through the mould, suitably heated by circulation channels of steam or other heating fluid, arranged in the vulcanisation apparatus.

US-3,718,721 proposes a method for controlling the state of vulcanisation of at least one portion of a tyre during the heat supplying thereto, according to which - at a predetermined zone of the tyre - a probe is inserted for the temperature detection. During the heat supplying to the tyre, the temperature of the elastomeric material at the probe is detected as a function of time, in order to calculate the actual vulcanisation state reached by the tyre portion where the probe is inserted. Upon reaching a predetermined cross-linking degree, the supply of the heat is terminated.

According to the document US-8,163,210, in the name of the same Applicant, a process is implemented in which two or more thermal detection probes operate in respective zone of the tyre being processed, to detect the cross-linking degree of the elastomeric compositions during the execution of the vulcanisation cycle. The heat supplying is interrupted when - in a first zone of the tyre - a desired cross-linking degree has been reached, such to obtain the performance characteristics of the tyre, and - in a second zone of the tyre - a cross-linking degree has been reached that is greater than a predetermined minimum value, such to obtain the structural integrity characteristics of the tyre.

The Applicant has observed that the obtainment of an optimal cross-linking degree is linked with a combination of numerous simultaneous factors, which are hard to predict and control ahead of time.

On such matter, the Applicant has observed that in assemblies of vulcanisation apparatuses, even if apparently operating given the same working conditions - relative for example to the supply temperature of the heating fluid, and/or to the type and to the size of the tyres being produced - actual vulcanisation times may be requested that are different in order to obtain tyres with a same desired cross-linking degree.

The Applicant has verified that the causes which determine vulcanisation times that are significantly different from each other and/or from the nominal vulcanisation time, are essentially due to external factors which in the end cause a considerable lowering of the temperature in the zones of the mould adjacent to the tyre where the detection probes operate.

The Applicant has found that by monitoring the vulcanisation times so as to record the trend of the same to reach and/or maintain values close to the tolerance limits in the course of one or more vulcanisation cycles, and by applying suitable operations on the temperature for supplying the heating fluid (e.g. steam) to the mould, it is possible to attain quality improvements and obtain increases of productivity.

More particularly, in accordance with a first aspect, the invention relates to a process for the vulcanisation of tyres according to claim 1.

In accordance with a second aspect, the present invention relates to a vulcanisation apparatus for tyres according to claim 11.

The Applicant deems that the comparison of the actual vulcanisation time with the nominal vulcanization time and the consequent recording of the warning signals allow effectively and predictably identifying the trend of the system to approach the admissible tolerance limits. The timely modification of the operating temperature in response to the recording of the warning signals allows bringing the actual vulcanisation time back to values closer to the nominal value. The maintenance of the actual vulcanisation time close to the nominal value removes the risk of producing production defects or negatively affecting the quality following sudden changes of the surrounding conditions. In addition, when the actual vulcanisation time is greater than nominal value, the reduction of the same in order to bring it close to the actual vulcanisation time brings additional benefits in terms of productivity.

In at least one of the aforesaid aspects, the present invention can also comprise one or more of the following preferred characteristics.

Preferably, the supply of the heat begins when the green tyre is closed in the vulcanisation mould.

Preferably, said warning signals are each recorded at the end of a respective vulcanisation cycle.

Preferably, each vulcanisation cycle begins with the closure of the tyre in the mould, and terminates with the interruption of the heat supplying.

Preferably, said at least one attention threshold comprises a lower attention threshold corresponding to an actual vulcanisation time lower than nominal vulcanisation time by an amount greater than about 20s.

Preferably, said at least one attention threshold comprises a lower attention threshold corresponding to an actual vulcanisation time lower than the nominal vulcanisation time by an amount comprised between about 20s and about 60s. Preferably, said at least one attention threshold comprises a lower attention threshold corresponding to an actual vulcanisation time lower than the nominal vulcanisation time by an amount greater than about 30s.

Preferably, said at least one attention threshold comprises a higher attention threshold corresponding to an actual vulcanisation time greater than the nominal vulcanisation time by an amount of at least about 60s.

Preferably, said at least one attention threshold comprises a higher attention threshold corresponding to an actual vulcanisation time greater than the nominal vulcanisation time by an amount comprised between about 60s and about 120s. Preferably, said at least one attention threshold comprises a higher attention threshold corresponding to an actual vulcanisation time greater than the nominal vulcanisation time by an amount greater than about 90s.

Preferably, modifying the operating temperature comprises increasing the operating temperature when the actual vulcanisation time exceeds said at least one attention threshold. Preferably, modifying the operating temperature comprises reducing the operating temperature when the actual vulcanisation time is lower than said at least one attention threshold.

Preferably, modifying the operating temperature comprises increasing the operating temperature by an amount comprised between about 0.5°C and about 2°C.

Preferably, modifying the operating temperature comprises decreasing the operating temperature by an amount comprised between about 0.5°C and about 2°C.

Preferably provision is also made for interrupting the heat supplying after a predetermined maximum vulcanisation time has elapsed, before the cross-linking degree in said at least one detection zone has reached the reference value.

Preferably, provision is also made for opening the mould after interrupting the heat supplying, and detecting the cross-linking degree reached upon opening the mould.

Preferably, provision is also made for comparing the cross-linking degree reached upon opening the mould with a reference value, and scoring the vulcanised tyre based on a detectable difference between the cross-linking degree reached upon opening the mould and the reference value.

Preferably, the monitoring is carried out simultaneously in a first detection zone and in a second detection zone.

Preferably, the heat supplying is interrupted when an average value of the cross-linking degree reached in the first detection zone and in the second detection zone reaches said reference value.

Such average value can be conveniently used as reference for establishing the equivalent time and the consequent cross-linking degree reached in the tyre for the purpose of interrupting the supply of the heat. The system can thus effectively compensate for possible non-uniformities of reading of the first thermal detection probe and of the second thermal detection probe, for example due to a non-uniform distribution of the heat within the tyre, to a different calibration of the same probes, or to a malfunctioning of one of these.

Preferably, at least two green tyres are simultaneously closed in respective moulds.

Preferably, the heating fluid is simultaneously introduced into each of said moulds.

Preferably, the heat supplying is simultaneously interrupted in both moulds when an average value of the cross-linking degree reached in said at least one detection zone of each tyre reaches said reference value.

According to the Applicant, it is thus possible to obtain higher quality of the produced tyres. By keeping under consideration the average value of the cross-linking degrees, there is a greater probability of obtaining tyres with high-quality characteristics. Preferably, a subsequent warning signal is recorded if successive in the subsequent vulcanisation cycle and related to the exceeding of the same attention threshold.

Preferably, the recording is cancelled if said successive warning signal is not followed by said warning signal.

Preferably, said monitoring devices comprise:

     a first thermal detection probe operating in said first detection zone;
     a second thermal detection probe operating in a second detection zone.

Preferably, said electronic control unit is operatively connected with said first thermal detection probe and second thermal detection probe to detect cyclically, at predetermined time intervals, the temperature in said first detection zone and second detection zone, and calculating an average value of the cross-linking degree respectively reached in said first detection zone and second detection zone.

Preferably, said first detection zone and second thermal detection probe protrude equally from an inner surface of the mould, in order to operate in the respective first detection zone and second detection zone at equal depth in the tyre. Preferably, said monitoring devices also comprise at least one third thermal detection probe entirely located in a wall of the mould.

The third thermal detection probe can be convenient used to also detect the temperature within the mould itself, for example during the steps of starting and/or during the restarting of the operation of the vulcanisation apparatus, when the temperature of the mould must be brought to operating conditions. Preferably, the third thermal detection probe is positioned with one end thereof at a distance of less than 5 mm from the inner surface of the mould.

The third thermal detection probe is therefore also adapted to provide reliable data on the temperature reached instant by instant by the adjacent surface zones of the tyre, particularly in proximity to the tread band, where the control of the cross-linking degree is particularly critical in relation to the performance characteristics of the tyre in operation.

Preferably, at least two vulcanisation moulds are provided, having respective moulding cavities served by said feeding devices.

Preferably, said electronic control unit cooperates with the monitoring devices in order to interrupt the heat supplying simultaneously in both moulds, when an average value of the cross-linking degree reached in said at least one detection zone of each tyre reaches said reference value.

Preferably, a subsequent warning signal is recorded by the counter if successive in a subsequent vulcanisation cycle and related to the exceeding of the same attention threshold. Preferably, the counter is reset if said successive warning signal is not followed by said warning signal.

Further characteristics and advantages will be clearer from the detailed description of a preferred but not exclusive embodiment of a process and an apparatus for vulcanisation for tyres, in accordance with the present invention.

Such description will be set forth hereinbelow with reference to the enclosed drawings, provided only as a non-limiting example, in which:

-   figure 1 schematically shows, in radial section, one half of a vulcanisation mould constituting part of an apparatus for making tyres for vehicle wheels according to the present invention;
-   figure 2 shows an enlarged detail of figure 1, showing the positioning of the thermal detection probes within the mould;
-   figure 3 is a graph obtainable from a laboratory test aimed for detecting the cross-linking degree of a test piece as a function of time, at a predetermined reference temperature.

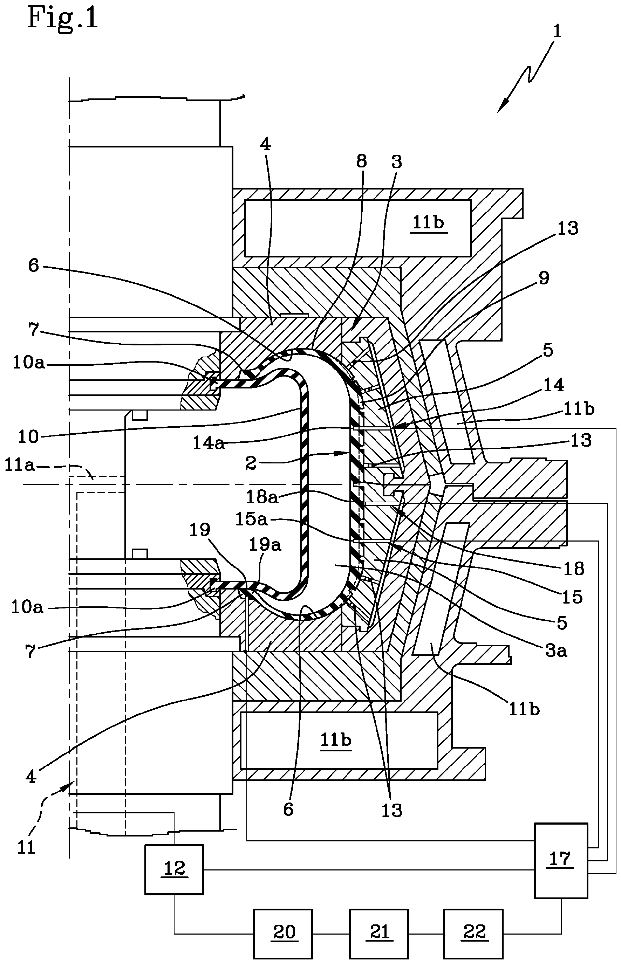

With reference to figure 1, reference number 1 overall indicates a vulcanisation apparatus for tyres of vehicle wheels, according to the present invention.

Such apparatus generally comprises at least one vulcanisation mould 3 defining a moulding cavity 3a adapted to receive a green tyre 2 to be subjected to a process of moulding and vulcanisation.

As is visible in figure 1, the vulcanisation mould 3 has a pair of axially opposite sidewall plates 4 and a plurality of circumferential sectors 5, movable in mutual approaching simultaneously with the closure of the mould 3.

The process of vulcanisation of each tyre 2 begins with the introduction and the closure of the same green tyre in the vulcanisation mould 3. Upon completed closure, the sidewall plates 4 and the sectors 5 define an inner surface 6 of the moulding cavity 3a counter-shaped with respect to the final shape to be conferred to the tyre 2. More particularly, the sidewall plates 4 are arranged to operate at so-called beads 7 and sidewalls 8 of the tyre 2 being processed, while the sectors 5 are adapted to operate on a tread band 9 of the tyre itself.

The green tyre 2, once closed in the mould 1, is pressed against the inner surface 6 of the moulding cavity 3a, for example due to an expandable membrane 10 or another suitable device. Subsequently, or simultaneously with the pressing step, feeding devices 11 for feeding a heating fluid supply heat to the green tyre 2 pressed against said inner surface 6.

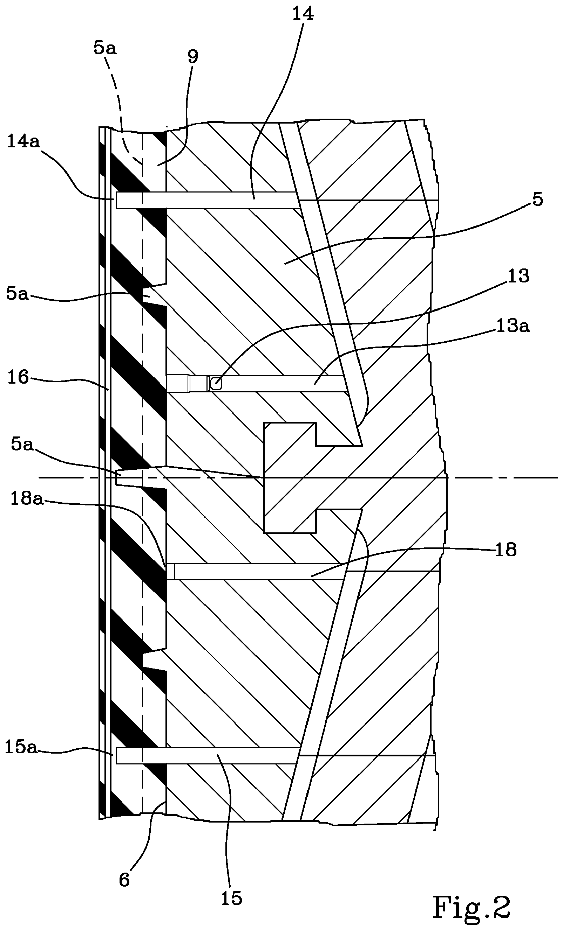

Due to the pressing, suitable reliefs 5a (figure 2) arranged on the sectors 5 and on the sidewall plates 4 determine the formation of a desired design on the tread band 9 of the tyre 2, as well as possible distinctive graphic marks and/or information marks on the sidewalls 8.

The supplied heat determines the cross-linking of the different elastomeric compositions constituting the tyre 2. Upon completed cycle, the heat supplying is interrupted and the finished tyre 2 (i.e. moulded and vulcanised) is extracted from the mould 1, upon opening of the same.

In figure 1 is by way of a non-limiting example a pressing device comprising a substantially toroidal shaping membrane 10 that has two circumferential edges carrying respective anchorage appendages 10a sealingly engageable in the mould 3. In the illustrated example, the feeding devices 11 provide that, in the mould 3, at least one supply duct 11a is made for supplying steam or another operating fluid, which flows within the membrane 10 so as to allow the expansion of the latter following the introduction of pressurized steam, compressing the green tyre 2 against the sidewall plates 4 and the sectors 5. In a preferred embodiment, the feeding devices 11 also provide that the mould 3 is operatively associated with channels 11b at the sidewall plates 4 and/or at the sectors 5, for supplying heat to the green tyre 2 to be vulcanised, preferably cooperating with the steam introduced in the expandable membrane 10.

Suitable temperature control devices 12, only schematically indicated since they can be made in any manner known to the man skilled in the art, maintain at a predetermined operating temperature the steam sent into the expandable membrane 10 and into the mould 3. The operating temperature can for example be comprised between 150°C and 210°C, for example equal to 180°C.

The vulcanisation mould 3 can also comprise a plurality of relief valves 13 mounted for example at the zone of the mould 3 close to the shoulders of the tyre 2 and at the crown zone of the latter. The relief valves 13, housed in respective through seats 13a (figure 2) arranged in the walls of the mould 3, carry out the function of evacuating, simultaneously with the pressing step, sacs of air or another fluid possibly employed in the vulcanisation process, present between the green tyre 2 and the inner surface 6 of the moulding cavity 3a.

The mould 3 is also operatively associated with monitoring devices 14, 15, 18 for monitoring the value of the cross-linking degree reached by the tyre 2, operatively connected with an electronic control unit 17 and/or other suitable devices for interrupting the heat supplying to the tyre 2 when a desired value of the cross-linking degree has been reached.

More particularly, the monitoring devices 14, 15, 18 can comprise at least one first thermal detection probe 14 operating in a respective first detection zone 14a positioned within the tyre 2. In the illustrated example, at least one second thermal detection probe 15 is also provided, operating in a second detection zone 15a.

At least one of the thermal detection probes 14, 15, protrudes by a predetermined amount from the inner surface 6 of the moulding cavity 3a, so as to be incorporated in the material, having an elastomeric composition thereof, which constitutes the tyre 2 in the respective detection zone. In the example better visible from figure 2, the first thermal detection probe 14 and the second thermal detection probe 15 protrude equally from the inner surface 6 of the moulding cavity 3a, such that the first detection zone 14a and the second detection zone 15a are situated in the tyre 2 at a same depth, at a desired distance from each other.

Preferably the first thermal detection probe 14 and the second thermal detection probe 15, or at least one of these, are carried by at least one of the sectors 5, so as to protrude into the moulding cavity 3a at the zone of the inner surface 6 arranged to operate against the tread band 9.

By way of example, the first thermal detection probe 14 and the second thermal detection probe 15 can protrude from the inner surface 6 of the moulding cavity 3a by an amount approximately comprised between about 1.5 and about 10 mm, preferably equal to about 8 mm. The first detection zone 14a and the second detection zone 15a are each situated at a distance from the inner surface 6 approximately comprised between about 70% and about 90% of the thickness of the tread band 9, in proximity to a belt structure 16 or another textile or metallic reinforcement structure, normally integrated in the tyre 2.

The monitoring devices can also comprise at least one third thermal detection probe 18, entirely located in a wall of the mould 3, for example at one of the sectors 5, preferably at a distance of less than 2 mm from the inner surface 6.

The third thermal detection probe 18, being completely incorporated in the mass of the mould 3, can be conveniently used to detect the temperature within the mould itself, for example during the steps of starting and/or during the restarting of the operation of the apparatus 1, when such temperature must be brought to operating conditions. On such matter, the electronic control unit 17 can be configured for enabling the introduction and/or closure of the tyre 2 in the mould 3 when the difference between the temperature detected by the third thermal detection probe 18 and a preset limit value is lower than a predetermined acceptability threshold.

Being positioned with an end thereof at a distance of less than 2 mm from the inner surface 6, the third thermal detection probe 18 is also adapted to provide reliable data on the temperature reached instant by instant in a third detection zone 18a represented by the adjacent surface zones of the tyre 2, at the tread band 9, where the control of the cross-linking degree is particularly critical in relation to the performance characteristics of the tyre 2 in operating conditions.

During the supplying of the heat to the tyre 2 closed in the mould 3, the probes 14, 15, 18 send, to the electronic control unit 17, signals that are representative of the temperature reached by the tyre 2 in the respective first detection zone 14a, second detection zone 15a and third detection zone 18a. The detection of the temperature through the probes 14, 15, 18 is carried out cyclically at relatively close time intervals, e.g. on the order of about 1s and preferably comprised between about 0.1s and about 60s, so as to substantially actuate a continuous monitoring of the progression of the temperatures during the heat supplying and in the course of the entire vulcanisation cycle.

The representative data of the temperatures is processed in the electronic control unit 17 according to a suitable preset algorithm, in order to monitor the cross-linking degree, inferred from a corresponding equivalent time (defined hereinbelow), progressively reached by the elastomeric compositions present in the first detection zone 14a, in the second detection zone 15a and in the third detection zone 18a.

Preferably, the algorithm used for determining the cross-linking degree is based on the below-reported equation, known in the field as "Arrhenius equation":

$$t_1/t_2 = \exp\left[-E/R\,(1/T_2 - 1/T_1)\right]$$

where:

R = universal gas constant;
E = energy for activating the cross-linking reaction, a characteristic of the employed cross-linkable elastomeric composition;
t1 = time necessary for obtaining the desired cross-linking degree at a constant reference temperature T1;
t2 = time necessary for obtaining the desired cross-linking degree at a constant temperature T2.

Consequently, once the time t2 is known for reaching a desired cross-linking state at a specific constant temperature T2, the time t1 necessary for reaching the same cross-linking state at the reference temperature T1 can be calculated.

The time t1 is commonly termed "equivalent time" for cross-linking.

Previously loaded in a memory unit associated with the electronic control unit 17 is representative data relative to the elastomeric composition present in at least one of the first detection zone 14a, second detection zone 15a and third detection zone 18a, such data representative of the equivalent time necessary for the cross-linking degree to reach a first reference value approximately comprised between 95% and 100%, and preferably higher than about 90% of the complete cross-linking. Also possibly inserted the memory unit 17 is data representative of the equivalent time necessary such that, at the aforesaid reference temperature, the cross-linking degree in one or more of the various zones subjected to monitoring reaches a second predetermined reference value, lower than the first reference value. The second reference value can be approximately comprised between 25% and 35%, and preferably not higher than about 50% of the complete cross-linking.

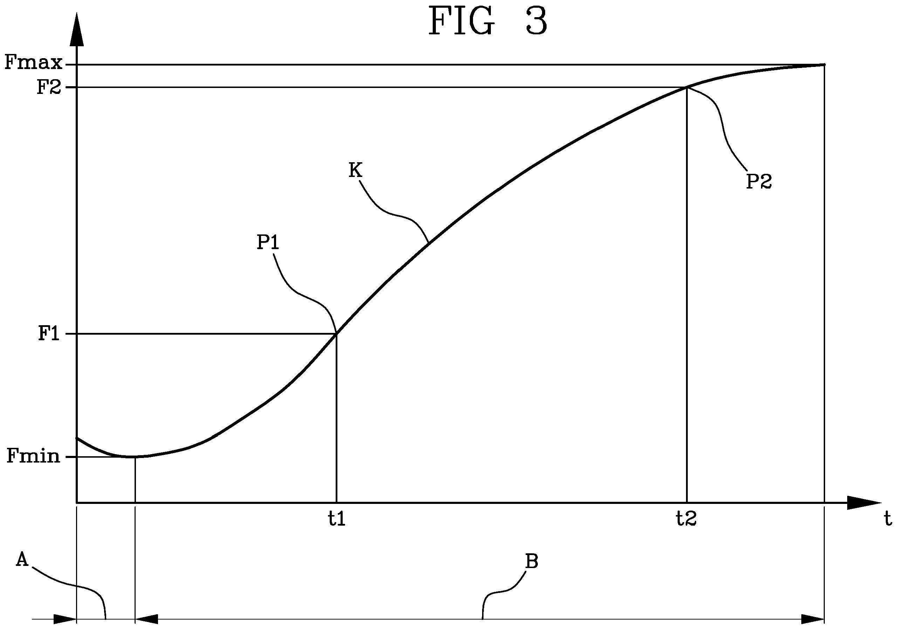

The aforesaid data representative of the equivalent time, stored in the control unit 17, can be previously established based on laboratory tests, performed for example according to the ISO 6502 standard, each on a test piece of the non-cross-linked elastomeric composition respectively present in each of the detection zones 14a, 15a, 18a, affected by the monitoring. Figure 3 is a graph obtainable from a typical laboratory test, in which the curve K represents the elastic reaction F set forth by the test piece over time t.

As can be observed, in an initial step A of the test, the elastic reaction F undergoes a slight decrease, due to the decrease of the viscosity of the material following heating, up to reaching a minimum value Fmin which is conventionally considered as a reference representative of a cross-linking degree equal to zero. After the initial step A, the elastic reaction F progressively increases up to reaching a maximum value Fmax, at which a cross-linking degree percentage equal to 100 is conventionally attributed.

At each point P1, P2 of the curve section K that subtends step B, the percentage value of the cross-linking degree reached by the material in the corresponding instant t1, t2 is expressed respectively by:

$$100 \times (F1-Fmin)/(Fmax-Fmin)$$

$$100 \times (F2-Fmin)/(Fmax-Fmin),$$

where F1 or F2 represent the value of the elastic reaction presented by the test piece at the instant t1 or t2.

The experimental data acquired during laboratory tests performed on test pieces of the elastomeric composition used in the detection zones 14a, 15a, 18a are stored in the electronic control unit 17, such that the latter can calculate the cross-linking degree reached in the same detection zones 14a, 15a, 18a, based on the data relative to the temperatures cyclically detected over time respectively by the first thermal detection probe 14, by the second thermal detection probe 15, and/or by the third thermal detection probe 18.

In particular, by employing the equivalent time values calculated at each reading cycle actuated by the probes 14, 15, 18, the electronic control unit 17 is capable of calculating the cross-linking degree reached at each instant by the elastomeric composition monitored by each of the probes themselves.

At each cycle for reading the thermal detection probes 14, 15, 18, the electronic control unit 17 compares the cross-linking degree calculated for each of the probes themselves with the respective reference value, in order to drive the interruption of the heat supplying, preferably simultaneously with the opening of the mould 3, when the value of the cross-linking degree detected by at least one of the probes 14, 15 and 18 reaches the aforesaid reference value.

For the first thermal detection probe 14 and for the second thermal detection probe 15, the reference value can be approximately comprised between about 25% and about 35%. For the third thermal detection probe 18, operating in a zone close to the outer surface of the tread band 9, the reference value of the cross-linking degree can be higher than about 90% and preferably comprised between about 95% and about 100%.

Preferably, the electronic control unit 17 calculates and detects an average value of the cross-linking degree reached in the first detection zone 14a and in the second detection zone 15a. Such average value can be conveniently used as a reference for establishing the equivalent time and the consequent cross-linking degree reached in the tyre 2 for the purposes of the interruption of the heat supplying. The system can thus effectively compensate for possible non-uniformities of reading of the first thermal detection probe 14 and of the second thermal detection probe 15, for example due to a non-uniform distribution of the heat within the tyre 2, to a different calibration of the same probes, or to a malfunction of one of the same.

The electronic control unit 17 may be programmed and/or configured for ignoring the data that arrived from one between the first thermal detection probe 14 and the second thermal detection probe 15, if they resulted excessively different from expected values, in a manner similar to that described in the document US-8,163,210 in the name of the same Applicant, whose contents are considered fully reported herein.

The electronic control unit 17 can conveniently be programmed and/or configured for driving the interruption of the heat supplying upon verification of the following conditions:

(i) the value of the cross-linking degree detected by the third thermal detection probe 18 reaches a first reference value;
(ii) the cross-linking degree detected by at least one between the first thermal detection probe 14 and the second thermal detection probe 15, or the average value detected by the same, has exceeded the second reference value.

It is thus possible to obtain in a specific zone of the tyre 2, for example in the third detection zone 18a in proximity to the outer surface of the tread band 9, a preferred cross-linking degree for the purpose of desired performance characteristics of the tyre 2. At the same time, the control actuated in the first detection zone 14a and in the second detection zone 15a and/or in other possible detection zones situated for example in internal parts of the tyre 2 that are more difficult for the heat to reach, prevents an interruption of the heat supplying before the cross-linking degree in said parts has reached a value that, even if lower than the optimal cross-linking degree requested on the outer surface of the tread band 9, is suitable for preserving the structural integrity of the tyre 2 in operating conditions.

The cross-linking process in the tyre 2 can continue for a certain period from the interruption of the heat supplying up to the extraction of the same from the mould 3, for example due to the heat stored within the mould 3. For such purpose, it can be provided that the cyclic detection of the temperatures by the thermal detection probes 14, 15, 18, of the equivalent times and of the consequent cross-linking degrees by the electronic control unit 17 lasts until the opening of the mould 3 and consequent extraction of the tyre 2. The cross-linking degree reached upon opening the mould 3 can be conveniently compared with the respective reference value, in order to execute a classification of the tyre 2 obtained.

The positioning of the first thermal detection probe 14 and/or of the second thermal detection probe 15 can be different from that described above, depending on the type and/or use destination of the tyre 2 being processed. The previously-described example is particularly adapted, by way of example, for high-performance tyres for sports uses, where the adherence offered by the tread band 9 assumes a particularly important role in the scope of the quality evaluation of the tyre 2.

In other situations, a control can be desired for the cross-linking degree at the beads 7 or, e.g. in run flat tyres, at the sidewalls 8 of the tyre 2. In this case, the first thermal detection probe 14 and/or the second thermal detection probe 15 can be situated so as to protrude into the moulding cavity 3a at a zone suitable for operating against the bead 7 or against the sidewall 8, where the first thermal detection zone 14a and/or the second thermal detection zone 15a will be defined.

As exemplified in the enclosed drawings, the cross-linking degree in proximity to the bead 7, or any other desired further detection zone 19a of the tyre 2, can also be monitored through at least one further thermal detection probe 19, served to the electronic control unit 17. The electronic control unit 17 can be configured for preventing the interruption of the heat supplying when the cross-linking degree detected by the further probe 19 has reached a further reference value, lower than said first reference value. Said further reference value can be equal to or different from the second reference value.

It is provided that the vulcanisation treatment be completed in a predetermined nominal vulcanization time, in which the optimal value can depend on many different factors such as the type of elastomeric compositions employed in making the tyre and the operating temperature of the heating fluid. The nominal vulcanization time suitable for a specific production can be each time calculated based on experimental data, and in the production of car tyres can be typically comprised between 15 minutes and 45 minutes, e.g. equal to 18 minutes.

The management carried out by the electronic control unit 17 based on the equivalent time data calculated starting from the data coming from the thermal detection probes 14, 15, 18 and/or 19, may nevertheless impose the interruption of the heat supplying and the conclusion of the vulcanisation cycle with the opening of the mould 3 at the expiry of an actual vulcanisation time, which can occur some time before or after the nominal vulcanization time.

Therefore, it is conveniently provided to perform a control on the actual vulcanisation times, and the application of interventions aimed to limit possible deviations of the same from the nominal vulcanization time.

For such purpose, it is preferably provided that the actual vulcanisation time, running between the activation and the deactivation of the feeding devices 11 of the heating fluid upon command of the electronic control unit 17, be each time detected via a chronometer or other chronometric devices 20 associated with the same electronic control unit 17. The actual time detected at the end of each vulcanisation cycle is stored and compared with the nominal vulcanization time by a comparator 21 associated with the electronic control unit 17. The comparator 21, which may possible be made in the shape of a module integrated in the electronic control unit 17, enables the emission of a warning signal each time the difference detected between the nominal vulcanisation time and the actual vulcanisation time at the end of each vulcanisation cycle exceeds a predetermined attention threshold, stored for example in the electronic control unit 17. In a preferred embodiment, at least one lower attention threshold and a higher attention threshold are fixed, corresponding to an actual vulcanisation time respectively lower and higher than the nominal vulcanization time.

In one embodiment, the lower attention threshold corresponds to an actual vulcanisation time lower than the nominal vulcanisation time by an amount greater than about 20s, preferably comprised between about 20s and about 60s, for example greater than about 30s. The higher attention threshold can in turn correspond to an actual vulcanisation time greater than the nominal vulcanisation time, preferably by an amount not higher than about 120s, more preferably comprised between about 60s and about 120s, for example greater than about 90s.

Each time the value of the difference detected by the comparator 21 is higher than the predetermined attention thresholds, a counter 22 associated with the electronic control unit 17 records the warning signal and adds it to possible preceding recorded warning signals. Preferably, the sum is only performed between analogous warning signals, i.e. all relative to the same attention threshold being exceeded, respectively lower or upper, and emitted in vulcanisation cycles that are immediately successive with respect to each other. In other words, if the vulcanisation cycle following the emission of a warning signal is concluded in an actual vulcanisation time comprised between the upper and lower attention thresholds, or exceeding the attention threshold opposite that previously exceeded, the counter is preferably reset.

Upon repeating a predetermined number of recorded warning signals, for example equal to 5 and approximately variable between 1 and 10, the electronic control unit 17 intervenes on the temperature control devices 12 in order to suitably modify the operating temperature of the heating fluid. For example, if in a predetermined number of preceding, respectively successive, vulcanisation cycles the lower attention threshold was exceeded, the operating temperature of the heating fluid, preset for example at 180°C, is preferably decreased by an amount approximately comprised between about 0.5°C and about 2°C. If on the other hand in the preceding vulcanisation cycles the higher attention threshold was repeatedly exceeded, the operating temperature of the heating fluid is increased, by an amount approximately comprised between about 0.5°C and about 2°C.

The modification of the operating temperature allows approaching the actual vulcanisation times to the nominal vulcanization time value, so as to reduce the risk of undesired quality deterioration of the tyres 2 obtained, due to unpredictable further fluctuations of the actual vulcanisation times due to unpredictable fluctuations of the process parameters.

In the electronic control unit 17, a maximum vulcanisation time can be stored, higher than the nominal vulcanization time and higher than the higher attention threshold. If the cross-linking degree detected through the data that arrived from the thermal detection probes 14, 15, 18 and/or 19 does not reach the desired reference values at the expiry of the maximum vulcanisation time, the interruption of the heat supplying can be driven together with the interruption of the vulcanisation cycle with the opening of the mould. The cross-linking degree reached can also in this case be compared with the respective reference value, in order to carry out the quality classification of the vulcanised tyre.

It can be provided that the vulcanisation apparatus 1 comprises two or more moulds 3 served by the same feeding devices 11. In this case two or more green tyres 2 are simultaneously closed and the heating fluid is simultaneously introduced into the moulds 3. The monitoring of the cross-linking degree will be performed in accordance with that described above simultaneously for each of the tyres 2, but preferably by keeping under consideration the average of the values of the cross-linking degree reached in each of the tyres themselves. In this case, the electronic control unit 17 will be conveniently configured for interrupting the heat supplying simultaneously in both vulcanisation moulds 3, when the average value calculated between the cross-linking degrees respectively reached in the single tyres 2 reaches the reference value.

It is thus possible to obtain higher quality of the produced tyres, with respect to what would be obtainable by interrupting the vulcanisation cycle only upon attaining the reference cross-linking degree in at least one of the tyres 2. It could in fact happen that upon attaining the reference cross-linking degree in one of the tyres 2, the cross-linking degree reached in the other tyre is lower or higher than the acceptability limits. By keeping under consideration the average value of the cross-linking degrees, there is a greater probability of obtaining tyres with high-quality characteristics.

**Claims**

1. Process for the vulcanisation of tyres, comprising the steps of:

   closing a green tyre (2) in a vulcanisation mould (3);
   introducing a heating fluid into the mould (3) at a predetermined operating temperature, for supplying heat to the tyre (2);
   during the heat supplying, enabling monitoring of a value of the cross-linking degree reached in at least one detection zone (14a, 15a, 18a, 19a) located inside the tyre (2);
   interrupting the heat supplying when the cross-linking degree in the detection zone (14a, 15a, 18a, 19a) reaches a predetermined reference value;

detecting and storing an actual vulcanisation time, running between the beginning and the interruption of the heat supplying;

comparing the actual vulcanisation time to a preset nominal vulcanization time, to detect a difference therebetween;

recording a warning signal when the difference between the actual vulcanisation time and the nominal vulcanisation time exceeds at least one predetermined attention threshold;

upon repeating a predetermined number of recorded warning signals, modifying the operating temperature of the heating fluid, in order to modify the actual vulcanisation time in the subsequent vulcanisation cycles.

2. Process according to claim 1, wherein said at least one attention threshold comprises a lower attention threshold corresponding to an actual vulcanisation time lower than the nominal vulcanisation time by an amount greater than 20 seconds.

3. Process according to one or more of the preceding claims, wherein said at least one attention threshold comprises a higher attention threshold corresponding to an actual vulcanisation time greater than the nominal vulcanisation time by an amount of at least 60 seconds.

4. Process according to one or more of the preceding claims, wherein modifying the operating temperature comprises increasing the operating temperature when the actual vulcanisation time exceeds said at least one attention threshold, and/or reducing the operating temperature when the actual vulcanisation time is lower than said at least one attention threshold.

5. Process according to one or more of the preceding claims, wherein modifying the operating temperature comprises increasing or decreasing the operating temperature by an amount comprised between 0.5 °C and 2 °C.

6. Process according to one or more of the preceding claims, further comprising interrupting the heat supplying after a predetermined maximum vulcanisation time has elapsed, before the cross-linking degree in said at least one detection zone (14a, 15a, 18a, 19a) has reached the reference value.

7. Process according to one or more of the preceding claims, further comprising:

opening the mould (3) after interrupting the heat supplying;

detecting the cross-linking degree reached upon opening the mould (3);

comparing the cross-linking degree reached upon opening the mould (3) to a reference value;

scoring the vulcanised tyre (2) based on a detectable difference between the cross-linking degree reached upon opening the mould (3) and the reference value.

8. Process according to one or more of the preceding claims, wherein monitoring is carried out simultaneously in a first detection zone (14a) and in a second detection zone (15a), and the heat supplying is interrupted when an average value of the cross-linking degree reached in the first detection zone (14a) and in the second detection zone (15a) reaches said reference value.

9. Process according to one or more of the preceding claims, wherein:

at least two green tyres (2) are simultaneously closed in respective moulds (3), the heating fluid is simultaneously introduced into each of said moulds (3), and the heat supplying is simultaneously interrupted in both moulds (3) when an average value of the cross-linking degree reached in said at least one detection zone (14a, 15a, 18a, 19a) of each tyre (2) reaches said reference value.

10. Process according to one or more of the preceding claims, wherein a subsequent warning signal is recorded if successive in the subsequent vulcanisation cycle and related to the same attention threshold being exceeded, wherein the recording is cancelled if said warning signal is not followed by said subsequent warning signal.

11. Vulcanisation apparatus for tyres, including:

at least one vulcanisation mould (3) having a moulding cavity (3a) for a green tyre (2);

feeding devices (11) for feeding a heating fluid into the mould (3), selectively activatable to provide a heat supplying to the tyre (2);

monitoring devices (14, 15, 18, 19) for monitoring a cross-link degree reached in at least one detection zone (14a, 15a, 18a, 19a) located inside the tyre (2);

an electronic control unit (17) cooperating with the monitoring devices (14, 15, 18, 19) for interrupting the heat supplying when the cross-linking degree in said at least one detection zone (14a, 15a, 18a, 19a) reaches a predetermined reference value;

chronometric devices (20) for detecting and storing an actual vulcanisation time, running between the activation and the deactivation of the heating fluid feeding devices (11);

a comparator (21) for comparing the actual vulcanisation time to a preset nominal vulcanisation time, and emitting a warning signal when a difference between the actual vulcanisation time and the nominal vulcanisation time exceeds at least one predetermined attention threshold;

a counter (22) for recording the warning signal emitted by the comparator (21);

temperature control devices (12) activatable by the counter (22) for modifying an operating temperature of the heating fluid when a predetermined number of warning signals has been recorded in the electronic control unit (17).

12. Apparatus according to claim 11, wherein said monitoring devices (14, 15, 18, 19) comprise:

a first thermal detection probe (14) operating in said first detection zone (14a);

a second thermal detection probe (15) operating in a second detection zone (15a);

the electronic control unit (17) being operatively connected to said first thermal detection probe (14) and second thermal detection probe (15) for cyclically detecting, at predetermined time intervals, the temperature in said first detection zone (14a) and second detection zone (15a), and calculating an average value of the cross-linking degree respectively reached in said first detection zone (14a) and second detection zone (15a).

13. Apparatus according to claim 12, wherein said first thermal detection probe (14) and second thermal detection probe (15) protrude equally from an internal surface of the mould (3), in order to operate in the respective first detection zone (14a) and second detection zone (15a) at equal depth in the tyre (2).

14. Apparatus according to claim 12 or 13, wherein said monitoring devices (14, 15, 18, 19) further comprise at least a third thermal detection probe (18) entirely located within a wall of the mould (3), at a distance of less than 5 mm from the internal surface of the same mould (3).

15. Apparatus according to one or more of claims 11 to 14, comprising at least two vulcanisation moulds (3) having respective moulding cavities (3a) served by said feeding devices (11), wherein said electronic control unit (17) cooperates with the monitoring devices (14, 15, 18, 19) for simultaneously interrupting the heat supplying in both moulds (2), when an average value of the cross-linking degree reached in said at least one detection zone (14a, 15a, 18a, 19a) of each tyre (2) reaches said reference value.

**Patentansprüche**

1. Verfahren zum Vulkanisieren von Reifen, umfassend die folgenden Schritte:

Schließen eines Reifenrohlings (2) in einer Vulkanisationsform (3);

Einführen eines Heizfluids in die Form (3) bei einer vorbestimmten Betriebstemperatur zum Zuführen von Wärme zu dem Reifen (2);

während der Wärmezufuhr Ermöglichen der Überwachung eines Werts des Vernetzungsgrads, der in mindestens einem Erfassungsbereich (14a, 15a, 18a, 19a) erreicht wird, der sich in dem Reifen (2) befindet;

Unterbrechen der Wärmezufuhr, wenn der Vernetzungsgrad in dem Erfassungsbereich (14a, 15a, 18a, 19a) einen vorbestimmten Referenzwert erreicht;

Erfassen und Speichern einer tatsächlichen Vulkanisationszeit, die zwischen dem Anfang und der Unterbrechung der Wärmezufuhr läuft;

Vergleichen der tatsächlichen Vulkanisationszeit mit einer voreingestellten Vulkanisations-Sollzeit, um einen Unterschied dazwischen zu erfassen;

Aufzeichnen eines Warnsignals, wenn der Unterschied zwischen der tatsächlichen Vulkanisationszeit und der Vulkanisations-Sollzeit mindestens einen vorbestimmten Aufmerksamkeits-Schwellenwert übersteigt;

beim Wiederholen einer vorbestimmten Anzahl von aufgezeichneten Warnsignalen Modifizieren der Betriebstemperatur des Heizfluids, um die tatsächliche Vulkanisationszeit in den anschließenden Vulkanisationszyklen zu modifizieren.

2. Verfahren nach Anspruch 1, wobei der mindestens eine Aufmerksamkeits-Schwellenwert einen niedrigeren Aufmerksamkeits-Schwellenwert umfasst, der einer tatsächlichen Vulkanisationszeit entspricht, die niedriger als die Vulkanisations-Sollzeit um eine Menge von über 20 Sekunden ist.

3. Verfahren nach einem oder mehreren der vorhergehenden Ansprüche, wobei der mindestens eine Aufmerksamkeits-Schwellenwert einen höheren Aufmerksamkeits-Schwellenwert umfasst, der einer tatsächlichen Vulkanisationszeit entspricht, die größer als die Vulkanisations-Sollzeit um eine Menge von mindestens 60 Sekunden ist.

4. Verfahren nach einem oder mehreren der vorhergehenden Ansprüche, wobei das Modifizieren der Betriebstemperatur das Erhöhen der Betriebstemperatur, wenn die tatsächliche Vulkanisationszeit den mindestens einen Aufmerksamkeits-Schwellenwert übersteigt, und/oder das Verringern der Betriebstemperatur umfasst, wenn die tatsächliche Vulkanisationszeit niedriger als der mindestens eine Aufmerksamkeits-Schwellenwert ist.

5. Verfahren nach einem oder mehreren der vorhergehenden Ansprüche, wobei das Modifizieren der Betriebstemperatur das Erhöhen oder Verringern der Betriebstemperatur um eine Menge umfasst, die sich zwischen 0,5 °C und 2 °C befindet.

6. Verfahren nach einem oder mehreren der vorhergehenden Ansprüche, ferner umfassend das Unterbrechen der Wärmezufuhr, nachdem eine vorbestimmte maximale Vulkanisationszeit verstrichen ist, bevor der Vernetzungsgrad in dem mindestens einen Erfassungsbereich (14a, 15a, 18a, 19a) den Referenzwert erreicht hat.

7. Verfahren nach einem oder mehreren der vorhergehenden Ansprüche, ferner umfassend:

Öffnen der Form (3) nach dem Unterbrechen der Wärmezufuhr;
Erfassen des Vernetzungsgrads, der beim Öffnen der Form (3) erreicht wurde;
Vergleichen des Vernetzungsgrads, der beim Öffnen der Form (3) erreicht wurde, mit einem Referenzwert;
Bewerten des vulkanisierten Reifens (2) basierend auf einem erfassbaren Unterschied zwischen dem Vernetzungsgrad, der beim Öffnen der Form (3) erreicht wurde, und dem Referenzwert.

8. Verfahren nach einem oder mehreren der vorhergehenden Ansprüche, wobei das Überwachen gleichzeitig in einem ersten Erfassungsbereich (14a) und in einem zweiten Erfassungsbereich (15a) durchgeführt wird, und die Wärmezufuhr unterbrochen wird, wenn ein durchschnittlicher Wert des Vernetzungsgrads, der in dem ersten Erfassungsbereich (14a) und in dem zweiten Erfassungsbereich (15a) erreicht wird, den Referenzwert erreicht.

9. Verfahren nach einem oder mehreren der vorhergehenden Ansprüche, wobei:

mindestens zwei Reifenrohlinge (2) gleichzeitig in jeweiligen Formen (3) geschlossen werden,
das Heizfluid gleichzeitig in jede der Formen (3) eingeführt wird, und
die Wärmezufuhr gleichzeitig in beiden Formen (3) unterbrochen wird, wenn ein durchschnittlicher Wert des Vernetzungsgrads, der in dem mindestens einen Erfassungsbereich (14a, 15a, 18a, 19a) von jedem Reifen (2) erreicht wird, den Referenzwert erreicht.

10. Verfahren nach einem oder mehreren der vorhergehenden Ansprüche, wobei ein anschließendes Warnsignal aufgezeichnet wird, wenn es in dem anschließenden Vulkanisierungszyklus aufeinanderfolgt und damit im Zusammenhang steht, dass derselbe Aufmerksamkeits-Schwellenwert überstiegen wird, wobei die Aufzeichnung abgebrochen wird, wenn auf das Warnsignal nicht das anschließende Warnsignal folgt.

11. Vulkanisationsvorrichtung für Reifen, die Folgendes beinhaltet:

mindestens eine Vulkanisationsform (3) mit einem Formhohlraum (3a) für einen Reifenrohling (2);
Zufuhrvorrichtungen (11) zum Zuführen eines Heizfluids in die Form (3), die selektiv aktiviert werden können, um eine Wärmezufuhr zu dem Reifen (2) bereitzustellen;
Überwachungsvorrichtungen (14, 15, 18, 19) zum Überwachen eines Vernetzungsgrads, der in mindestens einem Erfassungsbereich (14a, 15a, 18a, 19a) erreicht wird, der sich in dem Reifen (2) befindet;
eine elektronische Steuereinheit (17), die mit den Überwachungsvorrichtungen (14, 15, 18, 19) zusammenarbeitet zum Unterbrechen der Wärmezufuhr, wenn der Vernetzungsgrad in dem mindestens einen Erfassungsbereich (14a, 15a, 18a, 19a) einen vorbestimmten Referenzwert erreicht;
chronometrische Vorrichtungen (20) zum Erfassen und Speichern einer tatsächlichen Vulkanisationszeit, die zwischen der Aktivierung und der Deaktivierung der Heizfluid-Zufuhrvorrichtungen (11) läuft;
eine Vergleichsvorrichtung (21) zum Vergleichen der tatsächlichen Vulkanisationszeit mit einer voreingestellten Vulkanisations-Sollzeit und Ausgeben eines Warnsignals, wenn ein Unterschied zwischen der tatsächlichen Vulkanisationszeit und der Vulkanisations-Sollzeit mindestens einen vorbestimmten Aufmerksamkeits-Schwellenwert übersteigt;
einen Zähler (22) zum Aufzeichnen des Warnsignals, das von der Vergleichsvorrichtung (21) ausgegeben wird;
Temperatursteuervorrichtungen (12), die durch den Zähler (22) aktiviert werden können zum Modifizieren einer Betriebstemperatur des Heizfluids, wenn eine vorbestimmte Anzahl von Warnsignalen in der elektronischen Steuereinheit (17) aufgezeichnet wurde.

**12.** Vorrichtung nach Anspruch 11, wobei die Überwachungsvorrichtungen (14, 15, 18, 19) Folgendes umfassen:

eine erste Wärmeerkennungssonde (14), die in dem ersten Erfassungsbereich (14a) arbeitet; eine zweite Wärmeerkennungssonde (15), die in einem zweiten Erfassungsbereich (15a) arbeitet; wobei die elektronische Steuereinheit (17) operativ mit der ersten Wärmeerkennungssonde (14) und der zweiten Wärmeerkennungssonde (15) verbunden ist zum zyklischen Erkennen, in vorbestimmten Zeitintervallen, der Temperatur in dem ersten Erfassungsbereich (14a) und zweiten Erfassungsbereich (15a) und zum Berechnen eines durchschnittlichen Werts des Vernetzungsgrads, der jeweils in dem ersten Erfassungsbereich (14a) und dem zweiten Erfassungsbereich (15a) erreicht wird.

**13.** Vorrichtung nach Anspruch 12, wobei die erste Wärmeerkennungssonde (14) und die zweite Wärmeerkennungssonde (15) gleichermaßen von einer Innenfläche der Form (3) vorstehen, um in dem jeweiligen ersten Erfassungsbereich (14a) und zweiten Erfassungsbereich (15a) bei gleicher Tiefe in dem Reifen (2) zu arbeiten.

**14.** Vorrichtung nach Anspruch 12 oder 13, wobei die Überwachungsvorrichtungen (14, 15, 18, 19) ferner mindestens eine dritte Wärmeerkennungssonde (18) umfassen, die sich vollständig in einer Wand der Form (3) befindet, in einem Abstand von weniger als 5 mm von der Innenfläche derselben Form (3).

**15.** Vorrichtung nach einem oder mehreren aus Ansprüchen 11 bis 14, umfassend mindestens zwei Vulkanisationsformen (3) mit jeweiligen Formhohlräumen (3a), die von den Zufuhrvorrichtungen (11) versorgt werden, wobei die elektronische Steuereinheit (17) mit den Überwachungsvorrichtungen (14, 15, 18, 19) zusammenarbeitet zum gleichzeitigen Unterbrechen der Wärmezufuhr in beiden Formen (2), wenn ein durchschnittlicher Wert des Vernetzungsgrads, der in dem mindestens einen Erfassungsbereich (14a, 15a, 18a, 19a) von jedem Reifen (2) erreicht wird, den Referenzwert erreicht.

**Revendications**

**1.** Procédé de vulcanisation de pneus, comprenant les étapes consistant à :

fermer un pneu cru (2) dans un moule de vulcanisation (3) ;

introduire un fluide chauffant dans le moule (3) à une température de fonctionnement prédéterminée, pour fournir de la chaleur au pneu (2) ; pendant la fourniture de chaleur, permettre la surveillance d'une valeur du degré de réticulation atteint dans au moins une zone de détection (14a, 15a, 18a, 19a) située à l'intérieur du pneu (2) ; interrompre la fourniture de chaleur lorsque le degré de réticulation dans la zone de détection (14a, 15a, 18a, 19a) atteint une valeur de référence prédéterminée ; détecter et stocker une durée de vulcanisation réelle, s'étendant entre le début et l'interruption de la fourniture de chaleur ; comparer la durée de vulcanisation réelle à une durée de vulcanisation nominale prédéfinie, afin de détecter une différence entre elles ; enregistrer un signal d'avertissement lorsque la différence entre la durée de vulcanisation réelle et la durée de vulcanisation nominale dépasse au moins un seuil d'attention prédéterminé ; lors de la répétition d'un nombre prédéterminé de signaux d'avertissement enregistrés, modifier la température de fonctionnement du fluide chauffant, afin de modifier la durée de vulcanisation réelle dans les cycles de vulcanisation ultérieurs.

**2.** Procédé selon la revendication 1, dans lequel ledit au moins un seuil d'attention comprend un seuil d'attention inférieur correspondant à une durée de vulcanisation réelle inférieure à la durée de vulcanisation nominale d'une quantité supérieure à 20 secondes.

**3.** Procédé selon l'une ou plusieurs des revendications précédentes, dans lequel ledit au moins un seuil d'attention comprend un seuil d'attention supérieur correspondant à une durée de vulcanisation réelle supérieure à la durée de vulcanisation nominale d'une quantité d'au moins 60 secondes.

**4.** Procédé selon l'une ou plusieurs des revendications précédentes, dans lequel la modification de la température de fonctionnement comprend l'augmentation de la température de fonctionnement lorsque la durée de vulcanisation réelle dépasse ledit au moins un seuil d'attention, et/ou la réduction de la température de fonctionnement lorsque la durée de vulcanisation réelle est inférieure audit au moins un seuil d'attention.

**5.** Procédé selon l'une ou plusieurs des revendications précédentes, dans lequel la modification de la température de fonctionnement comprend l'augmentation ou la diminution de la température de fonctionnement d'une quantité comprise entre 0,5 °C et 2 °C.

**6.** Procédé selon l'une ou plusieurs des revendications précédentes, comprenant en outre l'interruption de la fourniture de chaleur après l'écoulement d'une durée de vulcanisation maximale prédéterminée, avant que le degré de réticulation dans ladite au moins une zone de détection (14a, 15a, 18a, 19a) n'ait atteint la valeur de référence.

**7.** Procédé selon l'une ou plusieurs des revendications précédentes, comprenant en outre :

l'ouverture du moule (3) après interruption de la fourniture de chaleur ;
la détection du degré de réticulation atteint à l'ouverture du moule (3) ;
la comparaison du degré de réticulation atteint à l'ouverture du moule (3) à une valeur de référence ;
l'évaluation du pneu vulcanisé (2) sur la base d'une différence détectable entre le degré de réticulation atteint à l'ouverture du moule (3) et la valeur de référence.

**8.** Procédé selon une ou plusieurs des revendications précédentes, dans lequel la surveillance est effectuée simultanément dans une première zone de détection (14a) et dans une deuxième zone de détection (15a), et la fourniture de chaleur est interrompue lorsqu'une valeur moyenne du degré de réticulation atteint dans la première zone de détection (14a) et dans la deuxième zone de détection (15a) atteint ladite valeur de référence.

**9.** Procédé selon l'une ou plusieurs des revendications précédentes, dans lequel :

au moins deux pneus crus (2) sont fermés simultanément dans des moules (3) respectifs,
le fluide chauffant est introduit simultanément dans chacun desdits moules (3), et
la fourniture de chaleur est interrompue simultanément dans les deux moules (3) lorsqu'une valeur moyenne du degré de réticulation atteint dans ladite au moins une zone de détection (14a, 15a, 18a, 19a) de chaque pneu (2) atteint ladite valeur de référence.

**10.** Procédé selon l'une ou plusieurs des revendications précédentes, dans lequel un signal d'avertissement ultérieur est enregistré s'il se succède dans le cycle de vulcanisation ultérieur et se rapporte au dépassement du même seuil d'attention, dans lequel l'enregistrement est annulé si ledit signal d'avertissement n'est pas suivi par ledit signal d'avertissement ultérieur.

**11.** Appareil de vulcanisation pour pneus, comprenant :

au moins un moule de vulcanisation (3) ayant une cavité de moulage (3a) pour un pneu cru (2) ;
des dispositifs d'alimentation (11) pour alimenter en fluide chauffant le moule (3), activables sélectivement pour fournir de la chaleur au pneu (2) ;
des dispositifs de surveillance (14, 15, 18, 19) pour surveiller le degré de réticulation atteint dans au moins une zone de détection (14a, 15a, 18a, 19a) située à l'intérieur du pneu (2) ;
une unité de commande électronique (17) coopérant avec les dispositifs de surveillance (14, 15, 18, 19) pour interrompre la fourniture de chaleur lorsque le degré de réticulation dans ladite au moins une zone de détection (14a, 15a, 18a, 19a) atteint une valeur de référence prédéterminée ;
des dispositifs chronométriques (20) pour détecter et stocker une durée de vulcanisation réelle, s'étendant entre l'activation et la désactivation des dispositifs d'alimentation en fluide chauffant (11) ;
un comparateur (21) pour comparer la durée de vulcanisation réelle à une durée de vulcanisation nominale prédéfinie, et émettre un signal d'avertissement lorsqu'une différence entre la durée de vulcanisation réelle et la durée de vulcanisation nominale dépasse au moins un seuil d'attention prédéterminé ;
un compteur (22) pour enregistrer le signal d'avertissement émis par le comparateur (21) ;
des dispositifs de commande de température (12) activables par le compteur (22) pour modifier une température de fonctionnement du fluide chauffant lorsqu'un nombre prédéterminé de signaux d'avertissement a été enregistré dans l'unité de commande électronique (17).

**12.** Appareil selon la revendication 11, dans lequel lesdits dispositifs de surveillance (14, 15, 18, 19) comprennent :

une première sonde de détection thermique (14) fonctionnant dans ladite première zone de détection (14a) ;
une deuxième sonde de détection thermique (15) fonctionnant dans une deuxième zone de détection (15a) ;
l'unité de commande électronique (17) qui est reliée fonctionnellement auxdites première sonde de détection thermique (14) et deuxième sonde de détection thermique (15) pour détecter cycliquement, à des intervalles de durée prédéterminés, la température dans lesdites première zone de détection (14a) et deuxième zone de détection (15a), et pour calculer une valeur moyenne du degré de réticulation atteint respectivement dans lesdites première zone de détection (14a) et deuxième zone de détection (15a).

13. Appareil selon la revendication 12, dans lequel lesdites première sonde de détection thermique (14) et deuxième sonde de détection thermique (15) font saillie de manière égale à partir d'une surface interne du moule (3), afin de fonctionner dans les première zone de détection (14a) et deuxième zone de détection (15a) respectives à une profondeur égale dans le pneu (2).

14. Appareil selon la revendication 12 ou 13, dans lequel lesdits dispositifs de surveillance (14, 15, 18, 19) comprennent en outre au moins une troisième sonde de détection thermique (18) entièrement située à l'intérieur d'une paroi du moule (3), à une distance inférieure à 5 mm de la surface interne du même moule (3).

15. Appareil selon l'une ou plusieurs des revendications 11 à 14, comprenant au moins deux moules de vulcanisation (3) ayant des cavités de moulage (3a) respectives desservies par lesdits dispositifs d'alimentation (11),
dans lequel ladite unité de commande électronique (17) coopère avec les dispositifs de surveillance (14, 15, 18, 19) pour interrompre simultanément la fourniture de chaleur dans les deux moules (2), lorsqu'une valeur moyenne du degré de réticulation atteint dans ladite au moins une zone de détection (14a, 15a, 18a, 19a) de chaque pneu (2) atteint ladite valeur de référence.

# Fig.1

Fig.2

FIG 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3718721 A

- US 8163210 B